# EUROPEAN PATENT APPLICATION

(11) **EP 4 696 763 A1**
(43) Date of publication of application: **18.02.2026**
(21) Application number: 24194295.2
(22) Date of filing: 13.08.2024
(51) Int. Cl.: C10M 105/72, C07F 5/00, C10M 105/74, C10M 135/18, C10M 137/10, C10N 30/06

(54) **NOVEL LANTHANIDE COMPLEXES AND THEIR APPLICATIONS IN LUBRICANTS**

(71) Applicant: Ravensberger Schmierstoffvertrieb GmbH, 33824 Werther (DE)
(72) Inventor: KIRCHHECKER, Sarah, 12207 Berlin (DE); de VRIES, Johannes Gerardus, 6228 GZ Maastricht (NL); TIN, Sergey, 18055 Rostock (DE); SHOIFET, Evgeni, 17493 Greifswald (DE); KARSCH, Markus, 18059 Ziesendorf (DE); THIES, Richard, 39108 Magdeburg (DE)
(74) Representative: Kleine, Hubertus

(57) **Abstract**

A compound, preferably a lubricant, being a metal complex with the formular: 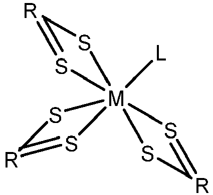 wherein R is either
PR1 R2 or
C-NR1 R2
wherein in the case of R = C-NR1 R2,
at least one of R1 or R2 comprises more than six carbon atoms or
R1 and R2 are interconnected by at least six carbon atoms.

## Description

### Technical Field

The present invention relates to lanthanide compounds, the use of the compounds as lubricants and lubricant mixtures with said compounds functioning as lubricating additives. Said lubricants and lubricating additives are complexes of ligands with lanthanides.

### Background Art

Compounds of this type with dithiocarbamate ligands were reported as lubricating additives for oils, which need to operate at high pressures. [R. B. Rastogi, J. L. Maurya, V. Jaiswal and D. Tiwary, Int. J. Ind. Chem., 2012, 3, 1-10.]

However, this document describes in this context the use of short hydrocarbon chains or cyclic (aromatic or non-aromatic) groups on nitrogen, which contained six carbon atoms or less. Thus, due to the need for high pressure conditions the lanthanide-compounds in the prescribed cases are not usable in numerous application such as engine oil.

### Disclosure of the invention

An inventive new compound is a metal complex with the formula: 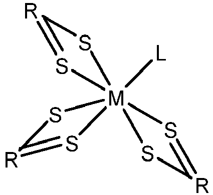
wherein R is either
PR1R2 or
C-NR1R2.

In the case of R = C-NR1R2, at least one of R1 or R2 comprises more than six carbon atoms.

Alternatively, R1 and R2 are interconnected, where the interconnecting group contains at least six carbon atoms.

The transition metal complexes of lanthanides, shown in the formula above, is suitable for the use as anti-wear agent as primary function but could also be used as antioxidant and/or friction modifier as secondary function agent in engine oils. Said compound can also be used alone as a lubricant itself.

The surprising discovery here is that when both chains are short with groups containing less than 6 carbon atoms on nitrogen or below 6 carbon atoms on nitrogen did not serve the purpose for the engine oils. However, when at least one substituent has longer chain groups on nitrogen or phosphorus of more than six carbon atoms, the complex possesses excellent performance especially as a lubricant or as a compound within a lubricant mixture.

Further advantageous embodiments are subject matter of the dependent claims.

In a preferred embodiment M is any lanthanide or a mixture of those, except Pm, wherein more preferably M is lanthanum or a mixture of metal species comprising lanthanum. Said lanthanides mentioned before are thus a group of metal species consisting of lanthanum, cerium, praseodymium, neodymium, samarium, europium, gadolinium, terbium, dysprosium, holmium, erbium, thulium, ytterbium and/or lutetium.

It is of advantage when R = PR1R2, wherein R1 and/or R2 comprises 1-50 carbon atoms.

It is further of advantage when R = C-NR¹R² and/or R = PR¹R² with R¹ comprises at least 8 to 50 carbon atoms, and R² contains 1 to 50 carbon atoms.

In a further preferred embodiment both R1 and R2 contain heteroatoms, preferably selected from a group consisting of sulfur, oxygen and/or nitrogen.

Each R1 and R2 can preferably consist of a linear molecule structure.

Additionally, or alternatively R1 and/or R2 may comprise at least one cyclic molecule structure, preferably at least one aromatic molecule structure.

The molecule structure of the compound may further be provided with R1 and/or R2, preferably both R1 and R2, consist of a branched or linear molecular structure.

R1 and R2 groups are preferably interconnected, more preferably by forming a cyclic molecule structure, wherein still more preferably R1 and R2 are interconnected by at least 6 to 72 carbon atoms.

In a further preferred embodiment R1 and/or R2, preferably both R1 and R2, are linear or branched hydrocarbon chains containing 10-36 carbon atoms.

L can preferably be selected from a group consisting of one bidentate ligand, one monodentate ligand/or two separate monodentate ligands.

It is further preferred if the binding atom(s) in L is or are nitrogen, sulfur, oxygen and/or phosphorus.

According to a further aspect of the invention the inventive compound can be used for the lubrication of a movable machine part as a standalone lubricant.

Further part of the invention is a lubricant mixture with the inventive compound as a lubricating additive, preferably a lubricant mixture serving as an engine oil or a gear oil. preferably a petroleum base oil, more preferably a group III base oil, according to API (American Petroleum Institute) definition.

In a preferred embodiment the concentration of the lubricant in said mixture is at least more than 0.05 % by weight and preferably less than 2.0 % by weight.

### Brief Description of the Drawings

The compound according to the invention is described in more detail herein below by way of exemplary embodiments and with reference to the attached drawings, in which:
- Fig. 1: shows a schematic view of the test conditions for the VKA-Test;
- Fig. 2: shows two results of a wear analysis of the surface taken with means of optical microscopy a) with base oil and b) with 0.7 % by weight of the novel lanthanum complex in the base oil; and
- Fig. 3: shows a graph representing a Weibull analysis of base oil and of different lubricant mixtures of a base oil with different concentrations of the novel lubricating complex.

### Description of Embodiments

In the following description certain terms are used for reasons of convenience and are not to be interpreted as limiting. The terms "right", "left", "up", "down", "under" and "above" refer to directions in the figures. The terminology comprises the explicitly mentioned terms as well as their derivations and terms with a similar meaning.

Two embodiments of the invention are described below:

### A Preparation of the complex

Ditridecylamine (39.72 g, 104.0 mmol) was put under vacuo to remove trace volatile low molecular weight amines. Ethanol (100 mL) was added, and all was cooled to 0°C and the mixture was degassed. Carbon disulfide (8.40 g, 110 mmol) was added by syringe under argon. Separately, NaOH pellets (4.20 g, 105 mmol) were dissolved in ethanol (100 mL), and the solution was degassed. This solution was added dropwise to the amine-CS₂ solution. Stirring of the yellow solution was continued for 1 h at r.t.

Lanthanum chloride (LaCl₃ .7H₂O, 12.82 g, 34.5 mmol) was dissolved in ethanol (80 mL) and this was added dropwise to the NaC₁₃DTC solution. A fine precipitate of NaCl formed and the product oiled out as well. After stirring for 2 h, a solution of 2,2'-bipyridine (5.38 g, 34.4 mmol) in ethanol (30 mL) was added dropwise to the ethanolic emulsion/suspension. The mixture turned yellowish. The volatiles were evaporated under vacuo and toluene (100 mL) was added. The reaction mixture was transferred to a separatory funnel and vigorously shaken with water (30 mL). After standing for 30 minutes, the bottom layer was drained, as well as a small part of the organic layer which contains insoluble organic-inorganic byproducts. The organic layer was vacuum-dried (2 mbar/120°C) to afford 56.0 g (97 % from theory) of LaC₁₃DTC-bipy - further referred to as LaDTC. This complex can be used as standalone lubricant.

### B Preparation of a liquid lubricant mixture

The complex LaC₁₃DTC-bipy was dissolved at different dosages in a high-quality petroleum base oil (API group III base oil; CAS 64742-54-7) with a kinematic viscosity at 100°C of 6 cSt.

The base oil is a mixture of saturated Hydrocarbons (C20-C50) without impurities of metals or hetero-elements like phosphorus or sulphur. The dosages of the Lanthanum complex of Example 1 were as following: 0.4%, 0.7%, 2.0% by weight.

### C Tribological tests

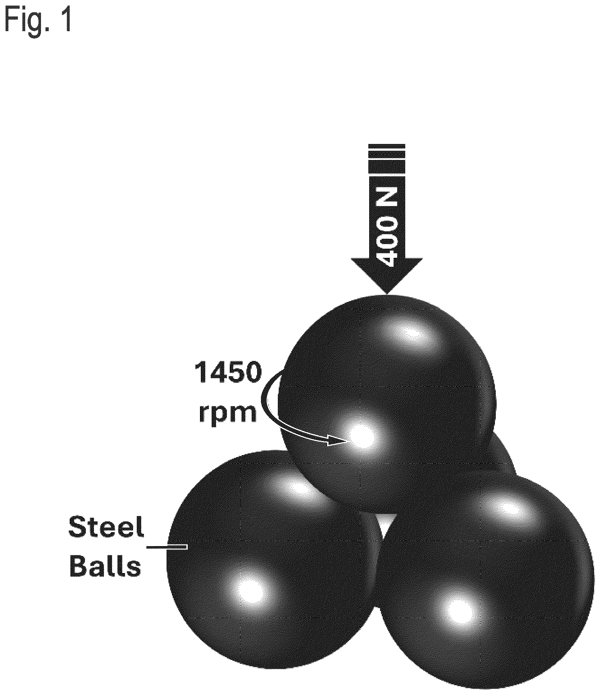

For the tribological tests the Four-Ball-Tester (DIN 51350) - also called VKATest - was chosen. The concept of this test is shown in Fig. 1. A defined load is applied to an arrangement of steel balls. The balls are standardized (DIN 5401) and made of 100Cr6 1.3505 bearing steel. The tests were performed at steady-state temperature. This was by design, to ensure only the energy, which is predominant in the tribological contact, is available for the activation of the additive, if such energy is needed at all.

The load of 400 N is distributed evenly over the three ball-to-ball contacts. The resulting maximum Hertzian pressure is 3468.7 MPa at the beginning of the test. With such a high pressure these ball-to-ball contacts are very demanding. Due to the wear the contact area increases which results in a decreased pressure during the test. The speed of 1450 rpm results in a contact speed of 0.56 m/s. The tests were conducted for a duration of 1 hour each. After the tests, the balls were extracted, and the surfaces measured with laser scanning microscope.

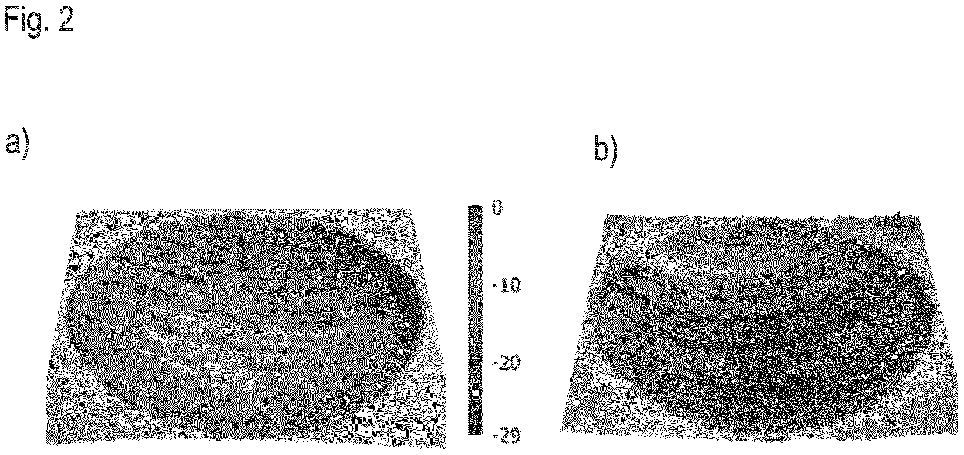

Exemplary results are shown in Fig. 2. In this figure one can see an indentation of the ball surface either with the pure base oil herein referred to as sample 2 or with addition of the LaDTC -complex with a concentration of 0.7% by weight in the base oil herein referred to as sample 1. The mean diameter of the deformation of the ball with a lubrication of sample 2 is 515 µm, wherein the mean diameter of the ball with a lubrication of sample 1 is 909 µm. Thus, the deformation by using sample 2 is significantly lower than the deformation with sample 1. The wear volume of sample 1 is 0.956 × 10⁶ µm³ wherein the wear volume of sample 2 is 10 × 10⁶ µm³, thus about 10 times higher than in sample 1. The nominal surface pressure EOT in sample 1 is 251.4 MPa wherein the nominal surface pressure EOT in sample 2 is 782,5 MPa.

### D Results

As can be determined by the aforementioned tribological test, the wear when using a liquid lubricant mixture said LaDTC-complex with 0.7% by weight in said base oil is significantly lower than in comparison with the pure base oil. Due to the constant load of 400 N with a smaller contact surface, a higher load-bearing capacity can also be observed. A statistical evaluation was conducted analogous to DIN 51819-3 using Weibull analysis.

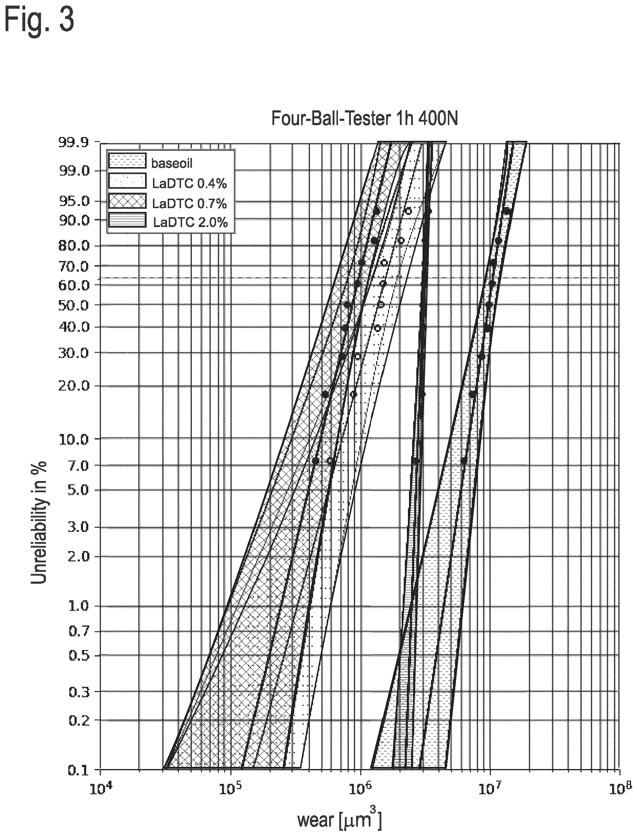

Fig. 3 shows the Weibull evaluations for four test series, base oil, and base oil with 0.4%, 0.7% and 2.0% LaDTC. Each test series consists of three trials, with three tribological-relevant contacts between the stationary balls and the rotating ball. The wear volume was measured for each stationary ball and added to the Weibull analysis. According to the Weibull analysis, each measurement is assigned a probability of failure. For the regression lines the maximum likelihood estimation method was used, which generates meaningful results and is the industrial standard. The 90 % confidence boundaries were added for each series of tests. The distribution of the Weibull analysis is shown in Fig. 3. With a 90% probability the results of future trials are likely to be in the marked ranges. The typical Weibull Parameters β (Slope) and n (characteristic lifetime -63.2%) for all tests are listed in the following Table 1.

**Table 1: Weibull factors**

| Name | β | n |
|---|---|---|
| Base oil | 5.285 | 1.05×10⁷ |
| LaDTC 0.4% | 2.948 | 1.56×10⁶ |
| LaDTC 0.7% | 3.335 | 9.73×10⁵ |
| LaDTC 2.0% | 20.56 | 3.11×10⁶ |

All graphs in Fig. 3 show a slope β bigger than one, which indicates a wear-based system, whereas a slope of one would signal a fatigue-based problem. A slope of less than one would occur when early failures are present.

Compared to the base oil - LaDTC enriched base oil shows a significant reduction in wear which represented by the characteristic lifetime n and the position of the graphs, in fact under these conditions it is almost impossible, that LaDTC generate wear level as the base oil. The biggest reduction in wear is achieved when 0.7% LaDTC is added to the base oil. The large slope value for LaDTC 2.0% is not unusual for wear determent tribological systems and results from a small spread in the results. This shows a change in action when different amounts of LaDTC are added to base oil and underlines the effectiveness of LaDTC to control the tribological system under these conditions.

## Claims

1. A compound, preferably a lubricant, being a metal complex of a lanthanum species with the formular: 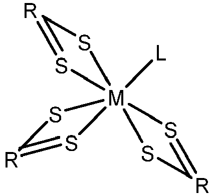 wherein R is either
PR1R2 or
C-NR1R2
wherein in the case of R = C-NR1R2,
at least one of R1 or R2 comprises more than six carbon atoms
or R1 and R2 are interconnected by at least six carbon atoms.

2. Compound according to claim 1, **characterized in that** M is any lanthanide or a mixture of those, except Pm, wherein more preferably M is lanthanum or a mixture of metal species comprising lanthanum.

3. Compound according to one of the preceding claims, **characterized in that** R = PR¹R², wherein R1 and/or R2 comprises 1-50 carbon atoms.

4. Compound according to one of the preceding claims, **characterized in that** R = C-NR¹R² and/or R = PR¹R² with R¹ comprises at least 8 to 50 carbon atoms, and R² contains 1 to 50 carbon atoms.

5. Compound according to one of the preceding claims, **characterized in that** both R1 and R2 contain heteroatoms, preferably selected from a group consisting of sulfur, oxygen and/or nitrogen.

6. Compound according to one of the preceding claims, **characterized in that** each R1 and R2 consist of a linear molecule structure.

7. Compound according to one of the preceding claims, **characterized in that** R1 and/or R2 comprise at least one cyclic molecule structure, preferably at least one aromatic molecule structure.

8. Compound according to one of the preceding claims, **characterized in that** R1 and/or R2, preferably both R1 and R2, consist of a branched molecule structure.

9. Compound according to one of the preceding claims, **characterized in that,** said R¹ and R² groups are interconnected, preferably by forming a cyclic molecule structure, wherein more preferably R¹ and R² are interconnected by at least 6 to 72 carbon atoms.

10. Compound according to one of the preceding claims, **characterized in that,** R1 and/or R2, preferably both R1 and R2, are linear or branched hydrocarbon chains containing 10-36 carbon atoms.

11. Compound according to one of the preceding claims, **characterized in that** L can be selected from a group consisting of one bidentate ligand, one monodentate ligand/or two separate monodentate ligands.

12. Compound according to one of the preceding claims, **characterized in that** the binding atom(s) in L is or are nitrogen, sulfur, oxygen and/or phosphorus.

13. Use of a compound according to one of the preceding claims as engine oil, preferably for the lubrication of a movable machine part as a standalone lubricant.

14. Lubricant mixture with the compound according to one of the preceding claims being as a lubricating compound and with a base oil, preferably a petroleum base oil, more preferably a group III base oil, according to API (American Petroleum Institute) definition.

15. Lubricant mixture according to claim 14, wherein the concentration of the compound in said mixture is at least more than 0.05 % by weight and preferably less than 2.0 % by weight.
